# EUROPÄISCHE PATENTANMELDUNG

(11) **EP 2 824 458 A1**
(43) Veröffentlichungstag der Anmeldung: **14.01.2015**
(21) Anmeldenummer: 13175470.7
(22) Anmeldetag: 08.07.2013
(51) Int. Cl.: G01N 35/00, B01F 13/08, B65G 47/14

(54) **Verfahren und Vorrichtung zur Vereinzelung von magnetisch anziehbaren Elementen**

(71) Anmelder: Siemens Healthcare Diagnostics Products GmbH, 35041 Marburg (DE)
(72) Erfinder: Wilmes, Hugo, 65812 Bad Soden (DE); Meindl, Josef, 65760 Eschborn (DE)

(57) **Zusammenfassung**

Die Erfindung betrifft ein Verfahren und eine Vorrichtung zur Vereinzelung von magnetisch anziehbaren Elementen im Allgemeinen und im Besonderen von magnetisch anziehbaren Rührkugeln oder Rührstäbchen in einem automatischen Analysegerät. Das Verfahren umfasst die Aufnahme einer Vielzahl von magnetisch anziehbaren Elementen mit Hilfe eines auf einer Bewegungsbahn beweglichen Permanentmagneten aus einem ungeordneten Vorrat und das sukzessive Abstreifen überzähliger magnetisch anziehbarer Elemente an entlang der Bewegungsbahn angeordneten Schikanen.

## Beschreibung

Die Erfindung betrifft ein Verfahren und eine Vorrichtung zur Vereinzelung von magnetisch anziehbaren Elementen im Allgemeinen und im Besonderen von magnetisch anziehbaren Rührkugeln oder Rührstäbchen in einem automatischen Analysegerät.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Je nach Art der durchgeführten Untersuchung kann eine Durchmischung der in einem Reaktionsgefäß befindlichen Flüssigkeit erforderlich sein. Auch die Durchmischung von Flüssigreagenzien, die beispielsweise sedimentierende Bestandteile, wie z.B. partikuläre Festphasen, enthalten, kann erforderlich sein. Hierzu kommen üblicherweise Magnetrührer zur Anwendung. Hierbei rotiert ein Magnet unter dem entsprechenden Reaktionsgefäß oder Reagenzbehälter mit regelbarer Geschwindigkeit. In dem Reaktionsgefäß oder Reagenzbehälter befindet sich ein stab- oder kugelförmiges, ferromagnetisches Rührelement, welches durch die magnetische Kraft des rotierenden Magneten ebenfalls in Rotation versetzt wird und so die Flüssigkeit in dem Reaktionsgefäß oder Reagenzbehälter in Bewegung setzt.

Im Stand der Technik werden die Rührelemente entweder manuell vom Anwender in die Reaktionsgefäße eingeführt, oder es werden Reaktionsgefäße bereitgestellt, die bereits ein oder mehrere Rührelemente enthalten.

Aufgrund der Vielzahl von durchzuführenden Testen in einem automatischen Analysegerät, von denen jedoch nur einige eine Durchmischung des Testansatzes erfordern, ist es wünschenswert, Küvetten automatisiert mit einzelnen Rührelementen zu bestücken.

Es ist daher Aufgabe der Erfindung, eine Vorrichtung bereit zu stellen, die eine schnelle und fehlerresistente Vereinzelung von magnetisch anziehbaren Rührelementen und eine automatisierte Bestückung von Reaktionsgefäßen mit den Rührelementen erlaubt.

Gegenstand der vorliegenden Erfindung ist ein Verfahren zur Vereinzelung von magnetisch anziehbaren Elementen, umfassend die Verfahrensschritte:
- Berühren eines Vorrats, der eine Vielzahl von magnetisch anziehbaren Elementen enthält, mit einer ebenen Oberfläche, die rückseitig, also auf der dem Vorrat abgewandten Seite, einen Permanentmagneten zum Aufnehmen einer Menge von magnetisch anziehbaren Elementen aufweist;
- Bewegen der Oberfläche über eine Schikane mit einer dem Querschnitt des jeweiligen magnetisch anziehbaren Elements entsprechenden Aussparung zum Abstreifen überzähliger magnetisch anziehbarer Elemente;
- Bewegen der Oberfläche über und entlang einer Rinne mit einem dem Querschnitt des jeweiligen magnetisch anziehbaren Elements entsprechenden Querschnitt zum Einführen eines magnetisch anziehbaren Elements in die Rinne;
- seitliches Bewegen der Oberfläche über den Rand der Rinne zum Lösen des in der Rinne befindlichen magnetisch anziehbaren Elements von der Oberfläche.

Das erfindungsgemäße Verfahren ermöglicht die Bevorratung einer Vielzahl von magnetisch anziehbaren Rührelementen in einem automatischen Analysegerät und die Durchführung der Vereinzelung im Gerät.

Es wurde erkannt, dass die magnetischen Eigenschaften der Rührelemente für die Vereinzelung genutzt werden können. Dazu wird zunächst eine Oberfläche mit einem rückseitig angebrachten Permanentmagneten durch entsprechende mechanische Führung an einem Vorrat, der eine Vielzahl von magnetisch anziehbaren Elementen enthält, vorbeigeführt, so dass eine Vielzahl von gleichartigen Rührelementen magnetisch an der Oberfläche haften bleibt. Bedingt durch die Verstärkung des magnetischen Feldes zur Quelle hin wird typischerweise ein Rührelement, das typischerweise die Form einer Kugel oder eines Stäbchens hat, eine Stellung über dem Permanentmagneten einnehmen und sich zudem gemäß der Nord-Süd-Polausrichtung des Magneten ausrichten. Darüber werden typischerweise weitere Rührelemente aus dem Vorrat in chaotischer oder nur teilweise geordneter Anordnungauf der Oberfläche haften bleiben. Diese werden durch Bewegen der Oberfläche über eine Schikane mit einer dem Querschnitt des jeweiligen Rührelementetyps entsprechenden Aussparung abgestreift, so dass nur noch ein einziges Rührelement oder gegebenenfalls zwei längs hintereinander angeordnete Rührelemente auf der Oberfläche übrig bleiben. Diese werden in eine Rinne mit einem dem Querschnitt des jeweiligen Rührelementetyps entsprechenden Querschnitt eingeführt, indem die Oberfläche über die Rinne gebracht wird. Wird dann die Oberfläche seitlich über den Rand der Rinne bewegt, was entweder durch Veränderung der Bewegungsrichtung der Oberfläche oder Krümmung der Rinne bewirkt werden kann, wird das oder die Rührelemente auf der Oberfläche seitlich bewegt, bis sie aus dem Einflussbereich des Permanentmagneten gelangen. Das oder die Rührelemente liegen dann aufgereiht in der Rinne.

In besonders einfacher Ausgestaltung erfolgt die Bewegung der Oberfläche entlang einer Kreisbahn, und die Pole des Permanentmagneten werden tangential ausgerichtet. Hierdurch kann die Oberfläche durch einfache Rotation durch einen Elektromotor bewegt werden, was die Durchführung des Verfahrens vereinfacht. Durch eine tangentiale Ausrichtung des Magneten werden die Rührelemente automatisch in Bewegungsrichtung ausgerichtet.

In weiterer vorteilhafter Ausgestaltung werden die Verfahrensschritte zyklisch wiederholt und die in der Rinne befindlichen Rührelemente in einen Schlauch geführt, dessen Innenquerschnitt dem Querschnitt des jeweiligen Rührelementetyps entspricht. Insbesondere bei der Ausgestaltung der Bewegung entlang einer Kreisbahn ist eine zyklische Wiederholung besonders einfach durchführbar. Hierbei werden in regelmäßigen Abständen neue Rührelemente aus dem Vorrat entnommen. Werden diese in einen Schlauch mit dem passenden Durchmesser geführt, liegen sie dort aufgereiht vor und können am Ende des Schlauchs einzeln entnommen bzw. abgegeben werden.

Eine Vielzahl von magnetisch anziehbaren Rührelementen, die dieselbe Form und Größe aufweisen, die also derselben Beschaffenheit sind, gehören zu einem Rührelementetyp.

Ein weiterer Gegenstand der vorliegenden Erfindung ist eine Vorrichtung zur Vereinzelung von magnetisch anziehbaren Elementen, die ausgelegt ist zum Durchführen des beschriebenen Verfahrens.

Die erfindungsgemäße Vorrichtung umfasst eine entlang einer vorgegebenen Bewegungsbahn bewegbare ebene Oberfläche mit einem rückseitig, also auf der dem Vorrat abgewandten Seite angebrachten Permanentmagneten, sowie folgende entlang der Bewegungsbahn angeordnete, die Oberfläche berührende Teile:
- einen Vorrat zum Aufnehmen einer Vielzahl von magnetisch anziehbaren Elementen;
- eine erste Schikane mit einer dem Querschnitt des jeweiligen magnetisch anziehbaren Elements entsprechenden Aussparung zum Abstreifen überzähliger magnetisch anziehbarer Elemente;
- eine Rinne mit einem dem Querschnitt des jeweiligen magnetisch anziehbaren Elements entsprechenden Querschnitt zur Aufnahme eines magnetisch anziehbaren Elements in die Rinne, wobei der Eintritt der Rinne in der Bewegungsbahn liegt und die Längsrichtung der Rinne in einem sich dem Eintritt anschließenden Bereich in der Ebene der Oberfläche von der Bewegungsbahn abweicht.

In vorteilhafter Ausgestaltung ist die Bewegungsbahn eine Kreisbahn, die ebene Oberfläche und die Kreisbahn liegen in einer Ebene, und die Pole des Permanentmagneten sind tangential ausgerichtet.

Vorteilhafterweise ist die ebene Oberfläche Teil einer Kreisplatte. Dies bietet den Vorteil, dass sich ein geschlossenes System bilden lässt: Vorrat, erste Schikane und Rinne werden in kreisförmiger Anordnung in einer runden Wanne angeordnet, die Kreisplatte wird mit den Magneten an der Außenseite als Deckel darauf drehbar angebracht. Lediglich eine Einführöffnung für die magnetisch anziehbaren Elemente und ein Austritt für die in der Rinne abgelegten magnetisch anziehbaren Elemente müssen vorgesehen sein. Die Vereinzelung erfolgt vollständig innerhalb des geschlossenen Raumes.

In weiterer vorteilhafter Ausgestaltung weist die Kreisplatte rückseitig eine Mehrzahl von Permanentmagneten auf einer Kreisbahn auf. Hierdurch lässt sich der Vereinzelungsprozess ohne Erhöhung der Drehzahl der Kreisplatte beschleunigen, da pro Umdrehung der Kreisplatte mehrere magnetisch anziehbare Elemente in die Rinne eingebracht werden können.

Vorteilhafterweise umfasst die Vorrichtung eine zweite entlang der Bewegungsbahn angeordnete, die Oberfläche berührende Schikane mit einer größeren Aussparung als die der ersten Schikane. Eine derartige zweite Schikane mit größerer Durchtrittsöffnung ist in der Bewegungsrichtung vor der ersten Schikane angeordnet und wirkt in der Art eines Grobfilters, der vor dem Abstreifen aller bis auf ein einziges magnetisch anziehbares Element zunächst die meisten überzähligen Elemente entfernt. Wird nämlich eine zu große Anzahl von Elementen von der Platte mitgeführt, kann es zu Verkantungen kommen, oder die dem Magneten am nächsten liegenden Elemente sind chaotisch angeordnet, so dass möglicherweise alle Elemente abgestreift werden. Dies wird durch eine vorgeschaltete gröbere Aussparung verhindert.

In vorteilhafter Ausgestaltung umfasst die Vorrichtung einen an die Rinne angeschlossenen Schlauch, dessen Innenquerschnitt dem Querschnitt des jeweiligen Typs der zu vereinzelnden magnetischen Elemente entspricht.

Die Ausrichtung des Schlauchs weist vorteilhafterweise eine Richtungskomponente in Richtung der Gravitation auf. Dadurch wird gewährleistet, dass die in Schlauch und Rinne eingeführten magnetisch anziehbaren Elemente selbsttätig im Schlauch nach unten fallen und dort entnommen oder mittels eines Hebels abgegeben werden können. Ein aktiver Weitertransport ist nicht erforderlich.

Vorteilhafterweise umfasst die Vorrichtung eine Anzahl von Sensoren für den Durchtritt von magnetisch anziehbaren Elementen. Die Sensoren können beispielsweise in der Art einer Lichtschranke ausgestaltet und an verschiedenen Punkten der Vorrichtung angeordnet sein. So kann beispielsweise mittels eines Sensors unterhalb der Austrittsöffnung der Rinne automatisiert festgestellt werden, ob tatsächlich ein magnetisch anziehbares Element bei einer Betätigung des Hebels ausgegeben wird. Durch Sensoren im Bereich des Schlauchs kann der Füllstand des Schlauches ermittelt werden.

Ein weiterer Gegenstand der vorliegenden Erfindung ist ein automatisches Analysegerät, das eine beschriebene Vorrichtung zur Vereinzelung von magnetisch anziehbaren Elementen umfasst. Vorzugweise ist die erfindungsgemäße Vorrichtung so angeordnet, dass eine Abgabe eines einzelnen magnetisch anziehbaren Elements in ein Reaktionsgefäß oder alternativ in ein Reagenzgefäß erfolgen kann.

Die mit der Erfindung erzielten Vorteile bestehen insbesondere darin, dass durch die mit Magneten innerhalb eines geschlossenen Systems erfolgende Vereinzelung von magnetisch anziehbaren Rührelementen eine besonders einfache und zuverlässige Bestückung von Reaktionsgefäßen mit Rührelementen in einem automatischen Analysegerät erfolgen kann. Die Rührstäbchen können dabei als Schüttgut vorliegen. Die Vorrichtung ist verschleißfrei und funktionssicher.

Die Erfindung wird anhand einer Zeichnung näher erläutert. Darin zeigen:
- FIG 1: eine Kreisplatte mit rückseitig angebrachten Magneten,
- FIG 2: eine mit der Kreisplatte verschließbare Wanne mit einem Vorrat für Rührelemente, mit Schikanen und mit einer Rinne, und
- FIG 3: die verbundene Vorrichtung mit Kreisplatte, Wanne und angeschlossenem Schlauch.

Gleiche Teile sind in allen Figuren mit denselben Bezugszeichen versehen.

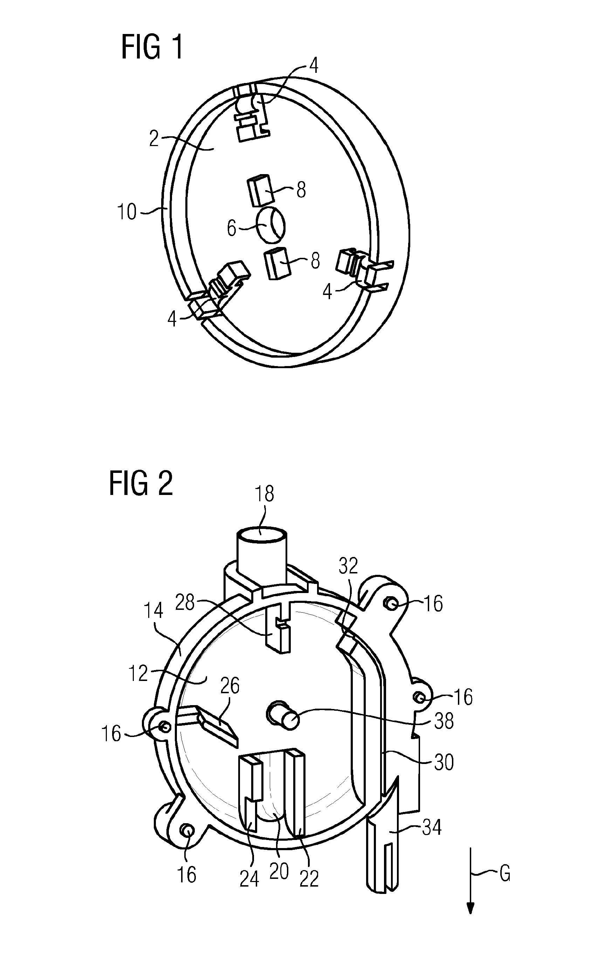

Die FIG 1 bis 3 erläutern die einzelnen Teile einer Vorrichtung 1 zur Vereinzelung von Rührelementen in einem nicht näher dargestellten Analysegerät. Die Rührelemente, die mit der Vorrichtung 1 vereinzelt und in Reaktionsgefäße abgegeben werden sollen, sind zylindrisch und haben eine Länge von 4 mm und einen Durchmesser von 1 mm. Sie sind aus einem ferromagnetischen Material gefertigt und werden als Schüttgut dem automatischen Analysegerät zugeführt. Die Rührelemente werden im Folgenden auch als Rührstäbchen bezeichnet.

FIG 1 zeigt eine Kreisplatte 2, die dazu dient, Rührstäbchen mittels Permanentmagneten 4 aufzunehmen und zu vereinzeln. FIG 1 zeigt eine rückseitige Ansicht der Kreisplatte 4, die auf der in FIG 1 nicht dargestellten Seite bis auf eine im Mittelpunkt angeordnete Bohrung 6 für eine Antriebswelle vollkommen eben ausgestaltet ist. Auf der gezeigten Rückseite sind im Bereich der Bohrung 6 Mitnehmer 8 zur Befestigung einer Antriebswelle angeordnet. Die drei Permanentmagnete 4 sind auf der Rückseite auf einer Kreisbahn um die Bohrung 6 angeordnet. Sie bilden dabei ein gleichseitiges Dreieck und sind mit ihrer Nord-Süd-Polachse tangential auf der Kreisbahn angeordnet. Die Kreisplatte 2 weist weiterhin einen erhabenen umlaufenden Rand 10 auf, der lediglich von Haltevorrichtungen für die Permanentmagnete 4 unterbrochen wird.

FIG 2 zeigt eine tellerförmige Wanne 12 mit kreisrund umlaufendem erhabenem Rand 14. Auf der Außenseite sind verschiedene Fixierstifte 16 zur passgenauen Fixierung der Vorrichtung 1 im automatischen Analysegerät angeordnet. FIG 2 zeigt die tellerförmige Wanne 12 in der für die Vorrichtung 1 bevorzugten Ausrichtung bezüglich der Gravitationskraft G. Die Wanne 12 wird von der in FIG 1 gezeigten Kreisplatte 2 derart verschlossen, dass die ebene Seite der Kreisplatte 2 zum Innenraum der Wanne 12 weist und einen geschlossenen Hohlraum bildet. Dementsprechend hat der Rand 14 denselben Durchmesser wie die Kreisplatte 2 und ist flach. Sämtliche im Folgenden erläuterten Einbauten in der Wanne 12 erstrecken sich ebenfalls bis zur Höhe des Randes 14, so dass sie die Kreisplatte 2 berühren, sofern dies nicht gesondert abweichend beschrieben ist.

Die Wanne 12 weist an ihrer oberen Seite eine Einfüllöffnung 18 für Rührstäbchen auf. In einem Kanal auf der Rückseite der Wanne 12 fallen die Rührstäbchen nach unten. Im Bereich des unten angeordneten Randes 14 ist der Kanal nach vorne gebogen und mit dem Innenraum der Wanne 12 verbunden. Hier bildet sich ein Vorrat 20 zur Aufnahme einer Vielzahl von Rührstäbchen, der von senkrechten Wandungen mit Rückhalterippen 22, 24 begrenzt wird. Der rückseitige Kanal bildet somit in der Art eines Steigrohres eine Einfüllvorrichtung für die Rührstäbchen, die ein vollständiges Auffüllen der Wanne 12 verhindert, sondern innerhalb der Wanne 12 lediglich eine Menge an Rührstäbchen vorhält und gleichzeitig Platz innerhalb der Wanne 12 für das im folgenden beschriebene Vereinzelungsverfahren lässt.

Die rechte Rückhalterippe 22 berührt nicht die Kreisplatte 2, so dass eine Durchlässigkeit für einzelne Rührstäbchen besteht. Die linke Rückhalterippe 24 erstreckt sich bis zur Kreisplatte 2, hat an ihrem unteren Ende jedoch eine Aussparung, die eine Durchlässigkeit für Rührstäbchen gewährleistet. Die Aussparung umfasst den Radius der Kreisbahn, auf der die Permanentmagnete 4 angeordnet sind.

Auf der linken Seite der Wanne 12 ist eine schräg nach unten orientierte Wandung mit einer in der Art einer Kante ausgebildeten Schikane 26 angeordnet. Diese weist eine Aussparung auf, die den Radius der Kreisbahn, auf der die Permanentmagnete 4 angeordnet sind, umfasst und sich nicht bis zur Kreisplatte 2 erstreckt. Die Aussparung ist kleiner als die Aussparung der linken Rückhalterippe 24 bemessen, jedoch immer noch so groß, dass mehrere Rührstäbchen gleichzeitig passieren können.

Am oberen Ende der Wanne 12 ist eine senkrecht angeordnete weitere Wandung mit einer in der Art einer Kante ausgestalteten Schikane 28 vorgesehen, die eine Aussparung aufweist, die exakt auf der Kreisbahn liegt, auf der die Permanentmagnete 4 angeordnet sind und die im Durchmesser nur geringfügig größer ist, als der Durchmesser eines Rührstäbchens. Die Aussparung lässt nur ein einzelnes oder zwei längs hintereinander angeordnete Rührstäbchen passieren.

Auf der rechten Seite der Wanne 12 ist eine Rinne 30 angeordnet, die von Wandungen begrenzt wird. Die dem Rand 14 zugewandte Wandung erstreckt sich weiter nach oben als die dem Rand 14 abgewandte Wandung. Die Rinne 30 ist in Durchmesser und Tiefe dem Durchmesser der Rührstäbchen angepasst. Ihr Eintritt 32 liegt auf der Kreisbahn der Permanentmagnete 4. Die Rinne 30 folgt zunächst dieser Kreisbahn, bis sie schließlich senkrecht nach unten führt.

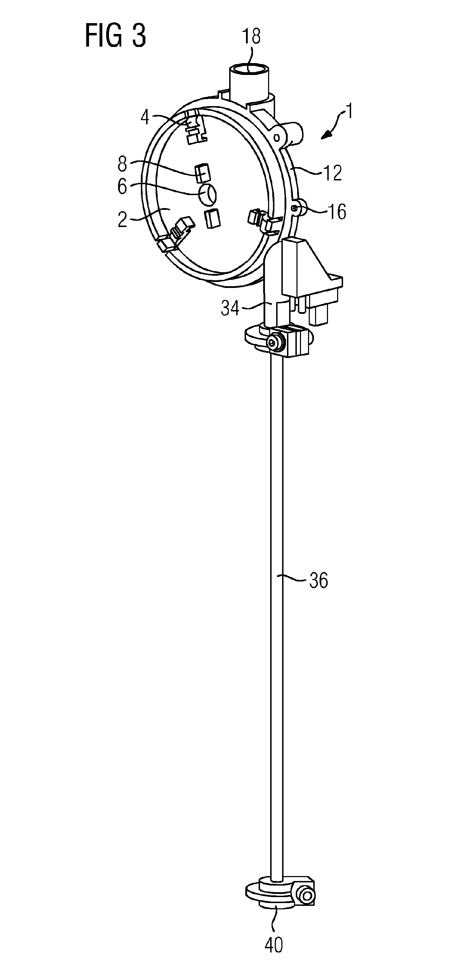

An die Rinne 30 schließt sich ein Anschluss 34 für den erst in FIG 3 gezeigten Schlauch 36 an. Die beschriebenen Wandungen erstrecken sich nicht bis zum Mittelpunkt der Wanne 12, so dass hier ein Freiraum verbleibt, in dem lediglich ein im Wesentlichen zylindrischer Lagerzapfen 38 mit einer Bohrung für eine Antriebswelle verbleibt.

FIG 3 zeigt die an der Wanne 12 befestigte Kreisplatte 2 mit den bereits beschriebenen Teilen und dem Schlauch 36.

Die Funktionsweise der Vorrichtung 1 wird nun anhand der FIG 1 bis 3 erläutert: Aus Sicht der FIG 2 wird die Kreisplatte 2 über eine nicht näher dargestellte Antriebswelle mit Elektromotor im Uhrzeigersinn gedreht. Wenn ein Permanentmagnet 4 den Vorrat 20 passiert, bleibt eine Vielzahl von Rührstäbchen aufgrund der magnetischen Kraft an der ebenen Oberfläche der Kreisplatte 2 haften. Die Rührstäbchen werden im Uhrzeigersinn mitgenommen. Überzählige Rührstäbchen werden an der Rückhalterippe 24 und der Schikane 26 nach und nach abgestreift und fallen nach unten. Spätestens nach der Schikane 26 sollte aufgrund der mit der Entfernung abnehmenden Kraftwirkung des magnetischen Feldes eines der Rührstäbchen eine bevorzugte Position direkt über dem jeweiligen Permanentmagneten 4 eingenommen haben. Es können auch zwei längs hintereinander angeordnete Rührstäbchen diese Position einnehmen.

An der Schikane 28 werden schließlich sämtliche bis auf das eine oder die zwei Rührstäbchen in der bevorzugten Position abgestreift und fallen zurück in den Vorrat 20. Das oder die verbleibenden Rührstäbchen werden in die Rinne 30 eingeführt. Sobald die Rührstäbchen den senkrechten Abschnitt der Rinne 30 erreichen, bewegt sich der Permanentmagnet 4 auf der Kreisbahn von der Rinne 30 weg. Die Rührstäbchen in der Rinne 30 können dem Permanentmagneten 4 aufgrund des Formschlusses nicht folgen und werden so aus dem Wirkungsbereich des Permanentmagneten 4 entfernt. Sie fallen anschließend in den Schlauch 36.

Die Umdrehung der Kreisplatte 2 verläuft kontinuierlich. Pro Umdrehung wird das beschriebene Verfahren durch die Verwendung von drei Permanentmagneten 4 dreimal durchgeführt. Am Anschluss 34 ist ein nicht näher dargestellter Sensor angeordnet, der den Durchtritt von Rührstäbchen erfasst. Die nicht näher gezeigte Steuereinheit ist so ausgelegt, dass bei einer Nichterfassung von Rührstäbchen während drei Umdrehungen der Antriebsmotor angehalten und in umgekehrter Richtung für eine Umdrehung bewegt wird. Danach wird wieder in den Normalbetrieb übergegangen. So können eventuelle Verkeilungen der Rührstäbchen im Inneren der Wanne 12 beseitigt werden.

Der Schlauch 36 ist flexibel und kann je nach Einbausituation entsprechend verlängert oder gekürzt und angeordnet werden. Am Anschluss 34 und dem Austritt 40 des Schlauches sind als Lichtschranken ausgebildete, nicht näher dargestellte Sensoren angeordnet. Die Sensoren dienen zur Detektion des Füllstandes des Schlauches 36 und ermöglichen der Steuereinheit die Prüfung der korrekten Funktion der Einheit mit Kreisplatte 2 und Wanne 12. Wird z.B. nach einer vorgegebenen Anzahl von Umdrehungen der Kreisplatte 2 kein Durchtritt von Rührstäbchen am Anschluss 34 erkannt, deutet dies auf eine Fehlfunktion, z.B. eine Verkeilung von Rührstäbchen in der Wanne 12 hin. Hier kann beispielsweise durch ein automatisiert veranlasstes Drehen der Kreisplatte 2 in umgekehrter Richtung die Verkeilung gelöst werden. Sollte die Fehlfunktion nicht beseitigt werden können, wird ein Benutzeralarm ausgelöst.

### BEZUGSZEICHENLISTE

- 1: Vorrichtung
- 2: Kreisplatte
- 4: Permanentmagnet
- 6: Bohrung
- 8: Mitnehmer
- 10: Rand
- 12: Wanne
- 14: Rand
- 16: Fixierstift
- 18: Einfüllöffnung
- 20: Vorrat
- 22, 24: Rückhalterippe
- 26, 28: Schikane
- 30: Rinne
- 32: Eintritt
- 34: Anschluss
- 36: Schlauch
- 38: Lagerzapfen
- 40: Austritt

- G: Gravitation

## Patentansprüche

1. Verfahren zur Vereinzelung von magnetisch anziehbaren Elementen, umfassend die Verfahrensschritte:
- Berühren eines Vorrats (20), der eine Vielzahl von magnetisch anziehbaren Elementen enthält, mit einer ebenen Oberfläche, die rückseitig mindestens einen Permanentmagneten (4) aufweist, zum Aufnehmen einer Menge von magnetisch anziehbaren Elementen;
- Bewegen der Oberfläche über eine Schikane (28) mit einer dem Querschnitt des jeweiligen magnetisch anziehbaren Elements entsprechenden Aussparung zum Abstreifen überzähliger magnetisch anziehbarer Elemente;
- Bewegen der Oberfläche über und entlang einer Rinne (30) mit einem dem Querschnitt des jeweiligen magnetisch anziehbaren Elements entsprechenden Querschnitt zum Einführen eines magnetisch anziehbaren Elements in die Rinne (30);
- seitliches Bewegen der Oberfläche über den Rand der Rinne (30) zum Lösen des in der Rinne (30) befindlichen magnetisch anziehbaren Elements von der Oberfläche.

2. Verfahren nach Anspruch 1, bei dem die Bewegung der Oberfläche entlang einer Kreisbahn erfolgt und die Pole des Permanentmagneten (4) tangential ausgerichtet sind.

3. Verfahren nach einem der vorhergehenden Ansprüche, bei dem die Verfahrensschritte zyklisch wiederholt werden und die in der Rinne (30) befindlichen magnetisch anziehbaren Elemente in einen Schlauch (36) geführt werden, dessen Innenquerschnitt dem Querschnitt des jeweiligen magnetisch anziehbaren Elements entspricht.

4. Verfahren nach einem der vorhergehenden Ansprüche zur Vereinzelung von kugel- oder stäbchenförmigen magnetisch anziehbaren Elementen.

5. Vorrichtung (1) zur Vereinzelung von magnetisch anziehbaren Elementen, ausgelegt zum Durchführen des Verfahrens nach einem der vorhergehenden Ansprüche.

6. Vorrichtung (1) zur Vereinzelung von magnetisch anziehbaren Elementen, umfassend eine entlang einer vorgegebenen Bewegungsbahn bewegbare ebene Oberfläche mit mindestens einem rückseitig angebrachten Permanentmagneten (4), sowie folgende entlang der Bewegungsbahn angeordnete, die Oberfläche berührende Teile:
- einen Vorrat (20) zum Aufnehmen einer Menge von magnetisch anziehbaren Elementen;
- eine erste Schikane (28) mit einer dem Querschnitt des jeweiligen magnetisch anziehbaren Elements entsprechenden Aussparung zum Abstreifen überzähliger magnetisch anziehbarer Elemente;
- eine Rinne (30) mit einem Eintritt (32) und mit einem dem Querschnitt des jeweiligen magnetisch anziehbaren Elements entsprechenden Querschnitt zur Aufnahme eines magnetisch anziehbaren Elements, wobei der Eintritt (32) der Rinne (30) in der Bewegungsbahn der ebenen Oberfläche liegt und die Längsrichtung der Rinne (30) in einem sich dem Eintritt (32) anschließenden Bereich in der Ebene der Oberfläche von der Bewegungsbahn abweicht.

7. Vorrichtung (1) nach Anspruch 6, bei der die Bewegungsbahn eine Kreisbahn ist, die ebene Oberfläche und die Kreisbahn in einer Ebene liegen, und die Pole des Permanentmagneten (4) tangential ausgerichtet sind.

8. Vorrichtung (1) nach Anspruch 6 oder 7, bei der die ebene Oberfläche Teil einer Kreisplatte (2) ist.

9. Vorrichtung (1) nach Anspruch 8, bei der die Kreisplatte (2) rückseitig eine Mehrzahl von Permanentmagneten (4) auf einer Kreisbahn aufweist.

10. Vorrichtung (1) nach einem der Ansprüche 6 bis 9, umfassend eine zweite die Oberfläche berührende Schikane (26), welche entlang der Bewegungsbahn zwischen dem Vorrat (20) und der ersten Schikane (28) angeordnet ist und welche eine größere Aussparung als die erste Schikane (28) aufweist.

11. Vorrichtung (1) nach einem der Ansprüche 6 bis 10, umfassend einen an die Rinne (30) angeschlossenen Schlauch (36), dessen Innenquerschnitt dem Querschnitt des jeweiligen magnetisch anziehbaren Elements entspricht.

12. Vorrichtung (1) nach Anspruch 11, bei der die Ausrichtung des Schlauchs (36) eine Richtungskomponente in Richtung der Gravitation (G) aufweist.

13. Vorrichtung (1) nach einem der Ansprüche 6 bis 12, umfassend eine Anzahl von Sensoren für den Durchtritt von magnetisch anziehbaren Elementen.

14. Verwendung einer Vorrichtung (1) gemäß einem der Ansprüche 5 bis 13 zur Vereinzelung von magnetisch anziehbaren Rührelementen, vorzugsweise von kugel- oder stäbchenförmigen Rührelementen, in einem automatischen Analysegerät.

15. Automatisches Analysegerät mit einer Vorrichtung (1) nach einem der Ansprüche 5 bis 13.
